# EUROPÄISCHE PATENTSCHRIFT

(11) **EP 3 331 411 B1**
(45) Veröffentlichungstag und Bekanntmachung des Hinweises auf die Patenterteilung: **17.02.2021**
(21) Anmeldenummer: 16732626.3
(22) Anmeldetag: 28.06.2016
(51) Int. Cl.: A47L 11/40

(54) **REINIGUNGSMITTELBEHÄLTER**
CLEANING AGENT CONTAINER
CONTENANT POUR DÉTERGENT

(30) Priorität: 07.08.2015 DE 202015104155 U
(43) Veröffentlichungstag der Anmeldung: 13.06.2018
(73) Patentinhaber: FRANKE Kaffeemaschinen AG, 4663 Aarburg (CH)
(72) Erfinder: VETTERLI, Heinz, 8855 Wangen (CH); TURI, Mariano, 8046 Zürich (CH)
(74) Vertreter: Lemcke, Brommer & Partner Patentanwälte Partnerschaft mbB
(86) Internationale Anmeldenummer: PCT/EP2016/064928
(87) Internationale Veröffentlichungsnummer: WO 2017/025238

(56) Entgegenhaltungen:
- EP-A1- 2 020 197
- EP-A1- 2 695 555
- WO-A1-2015/059213
- DE-A1-102008 003 733
- DE-A1-102009 030 416
- DE-A1-102011 081 010

## Beschreibung

Die vorliegende Erfindung betrifft einen Reinigungsmittelbehälter für ein integriertes Reinigungssystem einer Vorrichtung zur Ausgabe flüssiger Lebensmittel, insbesondere Milchprodukte.

Bei der Ausgabe flüssiger Lebensmittel, beispielsweise in Form von Heiß- oder Kaltgetränken, erfolgt in dem Ausgabegerät häufig eine Verarbeitung der flüssigen Lebensmittel, beispielsweise durch Erhitzung, Kühlung, Mischung unterschiedlicher Lebensmittelbestandteile, Aufschäumen oder Ähnlichem. Die Bauteile im Inneren der Getränkeausgabevorrichtung, die mit dem flüssigen Lebensmittel in Kontakt kommen, müssen hierbei aus hygienischen Gründen in regelmäßigen Zeitabständen gereinigt werden. Dies erfolgt in der Regel durch ein Reinigungssystem, welches die betroffenen Bauteile und Leitungssysteme mit einer Spüllösung spült. Je nach Art des Lebensmittels müssen hierbei spezielle Reinigungsmittel verwendet werden, mit denen Lebensmittelrückstände beseitigt werden können.

Das Reinigungsmittel liegt aus praktischen Gründen häufig als Konzentrat vor, aus dem in dem Spülsystem zusammen mit Wasser die Spüllösung gemischt wird. Das Reinigungssystem kann hierzu insbesondere eine Reinigungsmittelpumpe umfassen, welche dazu vorgesehen ist, das Reinigungsmittel aus einem Reinigungsmittelbehälter in eine Mischkammer zu fördern, in der die Spüllösung gemischt wird.

Ein Reinigungsmodul für Maschinen zur Herstellung flüssiger Lebensmittel, insbesondere für Kaffeemaschinen, ist in der DE 10 2008 903 733 beschrieben. Das Reinigungsmodul umfasst mindestens einen Reinigungsmittelbehälter, eine Dosierpumpe zur Förderung des Reinigungsmittels und einen Mischbehälter zum Mischen einer Spüllösung aus zugeführtem Wasser und Reinigungsmittel. Das Reinigungsmodul wird zur Durchführung eines Reinigungsvorganges anstelle eines Lebensmittelbehälters mit der Kaffeemaschine verbunden.

Aus der EP 2 020 197 A1 ist eine Vorrichtung zur Ausgabe von Milchschaum bekannt, bei der ein Getränkeauslauf abgenommen und zur Reinigung der Vorrichtung stattdessen auf den seitlichen Anschluss des Getränkeauslaufs ein speziell ausgestalteter Reinigungsmittelbehälter aufgesteckt werden kann.

Aus der WO 2015/059213 A1 ist eine Vorrichtung zur Zubereitung von Heißgetränken mit Entkalkungsfunktion bekannt. Hierzu wird auf einen bodenseitigen Anschluss eines Wasserbehälters eine Kartusche mit einem Entkalkungsmittel aufgesteckt. Die Kartusche hat in Ihrem Boden einen durchstechbaren Verschluss, welcher beim Aufstecken auf den Anschluss von einem dort vorgesehenen Dorn aufgestochen wird. Über den Anschluss kann Wasser aus dem Wasserbehälter durch die Kartusche hindurch angesaugt werden und wird dabei mit Entkalkungsmittel versetzt.

In der DE 10 2011 081 010 A1 ist ein Getränkespender für Haushaltszwecke mit einer Reinigungseinrichtung zur Durchführung eines Reinigungs- und/oder Entkalkungsvorgangs beschrieben. Diese weist eine starre mechanische Kopplungsvorrichtung für eine Kartusche mit Reinigungsmittel auf. Beim Einsetzen der Kartusche wird diese aktiviert, indem eine an der Kopplungsvorrichtung angeordnete Kanüle eine Durchstichmembran an der Kartusche durchdringt, sodass ein Kontakt des Bedieners mit dem Reinigungsmittel vermieden wird.

Aus der nicht vorveröffentlichten DE 10 2014 215 689 ist eine Getränkeausgabevorrichtung mit einem Reinigungssystem bekannt, bei der ein Reinigungsmittelbehälter und eine zugehörige Reinigungsmittelpumpe in die Getränkeausgabevorrichtung integriert sind. Wird ein Lebensmittelbehälter durch einen Reinigungsmittelmischbehälter ersetzt, so erkennt die Getränkeausgabevorrichtung dies automatisch und ein Reinigungsvorgang kann gestartet werden.

Bei einer solchen Getränkeausgabevorrichtung mit integriertem Reinigungssystem ist die einfache und sichere Handhabung des Reinigungsmittels besonders wichtig. Einerseits muss das Auffüllen oder Erneuern des Reinigungsmittels einfach und schnell auch von einem ungeübten Bediener durchführbar sein, andererseits muss sichergestellt sein, dass der Innenraum der Getränkeausgabevorrichtung nicht durch verschüttetes Reinigungsmittel verschmutzt wird. Insbesondere muss ausgeschlossen sein, dass Reinigungsmittel mit dem flüssigen Lebensmittel in Kontakt kommen kann.

Die Erfindung hat sich daher zur Aufgabe gesetzt, einen Reinigungsmittelbehälter anzugeben, der eine einfache und betriebssichere Handhabung ermöglicht.

Die Aufgabe wird gelöst durch die Merkmale des Anspruchs 1. Vorteilhafte Ausgestaltungen sind in den abhängigen Ansprüchen zu entnehmen.

Erfindungsgemäß ist ein Reinigungsmittelbehälter für ein integriertes Reinigungssystem einer Vorrichtung zur Ausgabe flüssiger Lebensmittel, insbesondere Milchprodukte, als ein allseitig geschlossenes Behältnis mit einem seitlich an dem Behältnis angeordneten Anschlussterminal ausgebildet. Das Anschlussterminal weist einen mit einem durchstechbaren Verschluss versehenen ersten Einstichbereich auf, der mit dem Bodenbereich des Behältnisses fluidisch kommuniziert.

Da der Reinigungsmittelbehälter allseitig geschlossen ist, kann beim Einsetzen in die Getränkeausgabevorrichtung kein Reinigungsmittel auslaufen oder verschüttet werden. Ein Zugang zu dem Reinigungsmittel im Reinigungsmittelbehälter erfolgt erfindungsgemäß, indem der Verschluss des Reinigungsmittelbehälters durchstochen wird. Das Durchstechen erfolgt vorzugsweise beim oder nach dem Einsetzen des Reinigungsmittelbehälters in die Getränkeausgabevorrichtung. Durch den Einstichkanal bzw. den Dorn, mit dem der Verschluss durchstochen wird, kann das Reinigungsmittel von einer Reinigungsmittelpumpe aus dem Reinigungsmittelbehälter gefördert werden, um daraus eine Spüllösung zu mischen und damit einen Reinigungsvorgang durchzuführen.

Erfindungsgemäß ist das Anschlussterminal in einem oberen Bereich des Reinigungsmittelbehälters angeordnet und der erste Einstichbereich mündet in eine zum Boden des Reinigungsmittelbehälters führende Entnahmeleitung. Somit ist sichergestellt, dass Reinigungsmittel einerseits vom Bodenbereich des Behälters angesaugt wird, sodass dieser möglichst vollständig entleert werden kann, und dass andererseits in dem Behälter verbliebenes Reinigungsmittel bei Entnahme des Reinigungsmittelbehälters nicht durch den Einstichkanal auslaufen oder nachtropfen kann.

Die Entnahmeleitung kann vorzugsweise einstückig mit dem Reinigungsmittelbehälter verbunden sein. Beispielsweise kann die Entnahmeleitung an der Außenseite des Behälters oder auch innerhalb des Behälters bis zu dessen Bodenbereich geführt sein und dort in den Innenraum des Reinigungsmittelbehälters münden.

Außerdem kann bei dem Reinigungsmittelbehälter vorgesehen sein, dass das Anschlussterminal einen ebenfalls mit einem durchstechbaren Verschluss versehenen zweiten Einstichbereich aufweist, der in den oberen Bereich des Reinigungsmittelbehälters mündet. Dieser zweite Einstichbereich kann ebenfalls mittels eines Dornes bei oder nach dem Einsetzen des Reinigungsmittelbehälters in die Getränkeausgabevorrichtung durchstochen werden, um eine Luftzufuhr in den Reinigungsmittelbehälter zu ermöglichen. Auf diese Weise kann bei Entnahme von Reinigungsmittel im Umfang des entnommenen Volumens Luft in den Reinigungsmittelbehälter einströmen, sodass kein Unterdruck in dem Reinigungsmittelbehälter entsteht.

Bei einer bevorzugten Ausführungsform ist der Reinigungsmittelbehälter in etwa quaderförmig ausgebildet und weist zwei lange und zwei schmale Seitenwände auf. Das Anschlussterminal ist hierbei an einer der schmalen Seitenwände angeordnet. Auf diese Weise kann der Reinigungsmittelbehälter platzsparend in der Getränkeausgabevorrichtung untergebracht werden. Insbesondere kann der Reinigungsmittelbehälter als Einschubkassette ausgebildet werden, die seitlich in einen als Einschubfach ausgebildeten Aufnahmeraum eingeschoben werden kann, und zwar vorzugsweise mit dem Anschlussterminal voraus.

Der durchstechbare Verschluss des ersten und/oder zweiten Einstichbereichs kann beispielsweise als elastischer Verschlussstopfen oder eine elastische Membran ausgebildet sein, beispielsweise aus Silikon oder Kautschuk. Ein solcher elastischer Verschlussstopfen bzw. Membran hat den Vorteil, dass sich der Einstichkanal beim Herausziehen eines Einstichdorns aufgrund der elastischen Materialeigenschaften mehr oder minder dicht schließt, sodass bei Herausnehmen des Reinigungsmittelbehälters kein Reinigungsmittel ausfließen kann.

Alternative kann der durchstechbare Verschluss des ersten und/oder zweiten Einstichbereichs als eine randseitig mit dem Reinigungsmittelbehälter verbundene, beispielsweise verschweißte Verschlussfolie ausgebildet sein.

Eine derartige Verschlussfolie kann auch zusätzlich vor einem Verschlussstopfen verwendet werden. Sie braucht in diesem Falle vor dem Einsetzen des Reinigungsmittelsbehälters nicht entfernt zu werden, sondern kann mit dem Verschlussstopfen zusammen durchstochen werden. Die Verschlussfolie dient dabei auch als Siegelfolie, mittels der erkannt werden kann, ob der Reinigungsmittelbehälter bereits in Benutzung war und der Verschlussstopfen somit bereits durchstochen wurde.

Im Falle der Verwendung einer durchstechbaren Membrane oder Folie als Verschluss kann zusätzlich hinter dem Einstichbereich eine zusätzliche Verschlusslippe angeordnet sein, welche nach Durchstechen des Verschlusses mittels eines hohlen Dorns von diesem beiseite gehalten wird und nach Entfernen des Dorns den von diesem geschaffenen Einstichkanal von innen verschließt. Eine solche Verschlusslippe dient somit als zusätzliche Auslaufsicherung beim Herausnehmen des Reinigungsmittelbehälters.

Vorteilhaft ist außerdem, wenn der hintere, von dem Anschlussterminal entfernte Bereich des Reinigungsmittelbehälters als Griffbereich mit einer Griffmulde ausgebildet ist. Der Reinigungsmittelbehälter kann dann in dem eingesetzten Zustand an seiner Griffmulde ergriffen und leicht herausgezogen werden.

Der Reinigungsmittelbehälter ist bevorzugt als Einwegbehälter ausgebildet und wird mit Reinigungsmittel befüllt, luftdicht verschlossen und mit intakter Siegelfolie geliefert. Somit ist sichergestellt, dass ein geeignetes bzw. vom Hersteller vorgeschriebenes Reinigungsmittel verwendet wird, so dass die Reinigung der Vorrichtung vorschriftsgemäß durchgeführt wird. Selbstverständlich kann aber der Reinigungsmittelbehälter auch nachfüllbar sein, so dass er aus seinem Einschubfach entnommen, neu befüllt und wieder in die Vorrichtung eingesetzt werden kann.

Daneben betrifft die Erfindung außerdem eine Vorrichtung zur Ausgabe flüssiger Lebensmittel, und insbesondere Milchprodukte, mit einem integrierten Reinigungssystem und einem Aufnahmeraum zum Einschieben eines Reinigungsmittelbehälters der vorstehend genannten Art. Die Vorrichtung weist in dem Innenraum an dessen, einer Einschuböffnung abgewandten Seite, in einer dem ersten Einstichbereich entsprechenden Höhe einen hohlen Dorn zum Durchstechen des Verschlusses des Reinigungsmittelbehälters auf. An dem hohlen Dorn, mit dem der Verschluss durchstochen wird, ist eine Reinigungsmittelzuleitung des integrierten Reinigungssystems angeschlossen. Der Dorn verbleibt somit zur Entnahme von Reinigungsmittel im Einstichkanal des durchstochenen Verschlussstopfens und stellt nach Durchstechen des Verschlusses eine fluiddichte Verbindung zwischen Reinigungsmittelbehälter und Reinigungssystem her.

Vorzugsweise ist an der der Einschuböffnung abgewandten Seite des Aufnahmeraumes in einer, einem zweiten Einstichbereich des Reinigungsmittelbehälters entsprechenden Höhe, ein zweiter hohler Dorn angeordnet, über den Luft in den Reinigungsmittelbehälter nachströmen kann. Bei einer solchen Getränkeausgabevorrichtung kann somit auf einfache Weise ein Reinigungsmittelbehälter durch die Einschuböffnung in den Aufnahmeraum eingeschoben werden, wobei beim Einschieben der bzw. die Einstichbereiche von dem bzw. den Einstichdornen durchstochen und der Reinigungsmittelbehälter dadurch automatisch an das Reinigungsmittelsystem zur Entnahme von Reinigungsmittel angeschlossen wird.

Weitere Vorteile und Eigenschaften der vorliegenden Erfindung werden nachfolgend anhand der Zeichnungen in einem Ausführungsbeispiel erläutert. Es zeigen:
- Figur 1: einen Schnitt durch einen in ein Einschubfach einer Getränkeausgabevorrichtung eingesetzten Reinigungsmittelbehälter,
- Figur 2: eine Frontalansicht des Reinigungsmittelbehälters aus Figur 1 auf eine Seitenwand mit einem Anschlussterminals,
- Figur 3: eine vergrößerte Ansicht eines Querschnittes durch den Reinigungsmittelbehälter
- Figur 4: eine Detailansicht des Anschlussbereichs mit durchstechbaren Verschlussstopfen und
- Figur 5: eine isometrische Darstellung des Reinigungsmittelbehälters aus Figur 1.

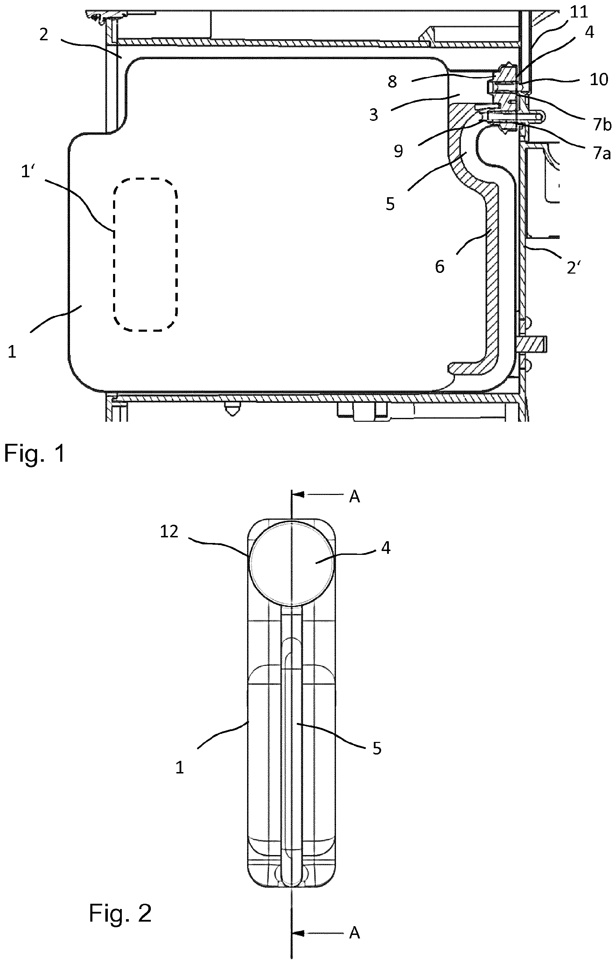

In Figur 1 ist ein seitlicher Schnitt durch einen Reinigungsmittelbehälter 1 gezeigt, der in ein zur Aufnahme des Reinigungsmittelbehälters 1 ausgebildetes Einschubfach 2 eines Kaffeevollautomaten eingesetzt ist. Der Reinigungsmittelbehälter 1 ist in etwa quaderförmig ausgebildet, wobei die Schnittebene A-A (vergleiche Figur 2) senkrecht zur schmalen Seite des Reinigungsmittelbehälters 1 verläuft. In seinem vorderen, in das Einschubfach 2 eingeschobenen Bereichs ist an den Reinigungsmittelbehälter 1 ein Flaschenhals 3 angesetzt, dessen Ende einen Anschlussterminal 4 bildet.

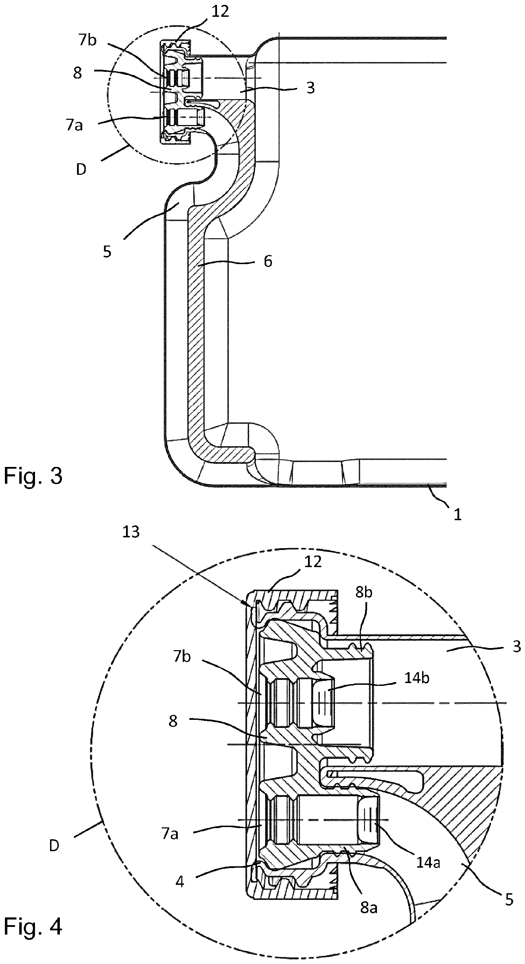

Vom unteren Bereich des Anschlussterminals 4 verläuft eine Entnahmeleitung 5 außerhalb des Reinigungsmittelbehälters 1 parallel an diesem entlang bis zu dessen Boden und mündet dort in den Reinigungsmittelbehälter 1. Die Entnahmeleitung 5 ist über Materialsteg 6 einstückig mit dem Reinigungsmittelbehälter 1 verbunden. Der Flaschenhals 3, der den Reinigungsmittelbehälter 1 mit dem Anschlussterminal 4 verbindet, mündet direkt in den oberen Bereich des Reinigungsmittelbehälters 1. Der untere Bereich des Anschlussterminals 4 bildet einen ersten Einstichbereich 7a, der in die Entnahmeleitung 5 mündet. Der obere, in den Flaschenhals 3 mündende Bereich des Anschlussterminals 4 bildet einen zweiten Einstichbereich 7b. Die Einstichbereiche 7a, 7b sind mit einer gemeinsamen, die gesamte vordere Öffnung des Anschlussterminals 4 abdeckenden Verschlussfolie 13 versehen, die randseitig auf die Öffnung des Anschlussterminals 4 aufgeschweißt oder aufgeklebt ist. Hinter der Verschlussfolie 13 befindet sich als zusätzliche Auslaufsicherung ein gemeinsames Silikonformteil 8 mit jeweils in die Öffnungen des Flaschenhalses 3 und der Entnahmeleitung 5 hineinragenden Stopfen 8a, 8b, die an ihrem jeweiligen Ende zwei mittig spitz zusammenlaufenden Verschlusslippen 14a, 14b aufweisen (siehe Figur 4).

In dem Einschubfach 2 ist an der rechten, der Einschuböffnung abgewandten Stirnseite 2' auf Höhe des ersten, unteren Einstichbereichs ein Hohldorn 9 angeordnet, der die Verschlussfolie 13 beim Einschieben des Reinigungsmittelbehälters 1 in das Einschubfach 2 durchsticht. An den Hohldorn 9 ist eine Reinigungsmittelzuleitung zu einem integrierten Reinigungssystem des Kaffeevollautomaten angeschlossen (nicht gezeigt). Oberhalb des Hohldorns 9 ist ein zweiter Hohldorn 10 angeordnet, die Verschlussfolie 13 auf Höhe des zweiten Einstichbereichs durchsticht. Der Hohldorn 10 ist mit einer Luftzuleitung 11 verbunden und sorgt dafür, dass bei Entnahme von Reinigungsmittel Luft in den Reinigungsmittelbehälter 1 nachströmen kann.

In Figur 2 ist eine Ansicht der Stirnseite des Reinigungsmittelbehälters 1 gezeigt. Das Anschlussterminal 4 im oberen Bereich des Reinigungsmittelbehälters ist von einer aufgeschraubten Verschlusskappe 12 geschützt, die vor Einsetzen des Reinigungsmittelbehälters 1 in das Einschubfach 2 des Kaffeevollautomaten abgeschraubt wird. Die Schnittlinie A-A markierte die Schnittebene der in Figur 1 sowie den Figuren 3 und 4 gezeigten Querschnitte. Vor dem Reinigungsmittelbehälter 1 verläuft von dem Anschlussterminal 4 bis zum unteren Bereich des Reinigungsmittelbehälters 1 die Entnahmeleitung 5. Diese schließt von der Seite gesehen bündig mit dem Anschlussterminal 4 ab und dient somit gleichzeitig als Endanschlag beim Einschieben des Reinigungsmittelbehälters 1 in das Einschubfach 2.

Der Reinigungsmittelbehälter 1 ist als Einwegartikel ausgeführt und ab Werk mit einem Reinigungsmittel befüllt. Im Ausführungsbeispiel ist das Reinigungsmittel ein Milchreiniger und dient zum Reinigen des in den Kaffeevollautomaten integrierten Milchschaumsystems von anhaftenden Milchrückständen, insbesondere Eiweißen. Das integrierte Reinigungssystem selbst ist wie in der zuvor genannten DE 10 2014 21 56 89 ausgebildet, auf die hier, um unnötige Wiederholungen zu vermeiden, vollinhaltlich Bezug genommen wird. Das Reinigungssystem weist neben dem Reinigungsmittelbehälter insbesondere eine Dosierpumpe sowie einen Reinigungsmittelmischbehälter auf, in welchem aus dem Reinigungsmittel und zugeführten Wasser eine Spüllösung gemischt wird. Zur Durchführung eines Reinigungsvorgangs werden das integrierte Milchschaumsystem des Kaffeevollautomaten, insbesondere die Milchpumpe, die Milchleitungen sowie gegebenenfalls vorhandene Durchlauferhitzer und Aufschäumkammer bis hin zum Auslass für Milch bzw. Milchschaum, mit der Spüllösung gespült. Anschließend wird mit Klarwasser und/oder Heißdampf nachgespült.

Der Reinigungsmittelbehälter 1 besteht aus einem Kunststoff wie etwa PET oder PE-HD. Der hintere Bereich des Reinigungsmittelbehälters 1 ist als Griffbereich ausgebildet und weist beidseitig eine Griffmulde 1' auf, an der der in die Kaffeemaschine eingesetzte Reinigungsmittelbehälter ergriffen und aus seinem Aufnahmefach herausgezogen werden kann.

Der vordere Bereich des Reinigungsmittelbehälters 1 mit dem Anschlussterminal 4 ist in Figur 3 nochmals dargestellt. Eine Detailansicht des Flaschenhalses 3 und des Anschlussterminals 4 ist in Figur 4 in einer vergrößerten Ansicht gezeigt. Der untere, in die Entnahmeleitung 5 mündende Einstichbereich 7a und der obere, über den Flaschenhals mit dem oberen Bereich des Milchbehälters 1 direkt verbundene Einstichbereich 7b sind von einem gemeinsamen Silikonformteil 8, welches zu der Entnahmeleitung 5 sowie dem Flaschenhals 3 hin jeweils in einem Stopfen 8a, 8b ausläuft, verschlossen. Vor dem Silikonteil 8 ist als gemeinsamer durchstechbarer Verschluss eine Kunststofffolie 13 angebracht und mit dem Rand des Anschlussterminals 4 verschweißt. Jeder der beiden Stopfen 8a, 8b ist an seinem inneren Ende mit einen Paar spitz zusammenlaufender Verschlusslippen 14a, 14b ausgestattet.

Die beiden Verschlusslippenpaare 14a, 14b schließen den zwischen ihnen jeweils verbleibenden Spalt fluiddicht ab. Wird der jeweilige Einstichbereich 7a, 7b mittels eines Hohldorns durchstochen, so hält der Hohldorn die betreffenden Verschlusslippen 14a, 14b auseinander. Wird der Hohldorn herausgezogen, verschließen die Verschlusslippenpaare 14a, 14b den zwischen ihnen jeweils gebildeten Spalt wieder, so dass auch nach Durchstechen der Verschlussfolie 13 kein Reinigungsmittel auslaufen kann, würde der Reinigungsmittelbehälter 1 aus seinem Aufnahmefach 2 genommen.

Die Kunststofffolie 13 wird beim Einsetzen des Reinigungsmittelbehälters in das Aufnahmefach 2 des Kaffeevollautomaten von den Einstichdornen 9, 10 durchstochen und der Reinigungsmittelbehälter damit zur Entnahme von Reinigungsmittel geöffnet. Anstelle einer Kunststofffolie 13 kann natürlich auch eine andere Art von Verschlussfolie oder Membran verwendet werden, beispielsweise eine Aluminiumfolie oder ein Verschluss aus einem Verbundstoff auf Kunststoff-, Papier- und/oder Metallbasis. Auf das Anschlussterminal 4 ist zum Schutz eine Kunststoffkappe 12 aufgeschraubt, die vor dem Einsetzen des Reinigungsmittelbehälters abgenommen werden muss.

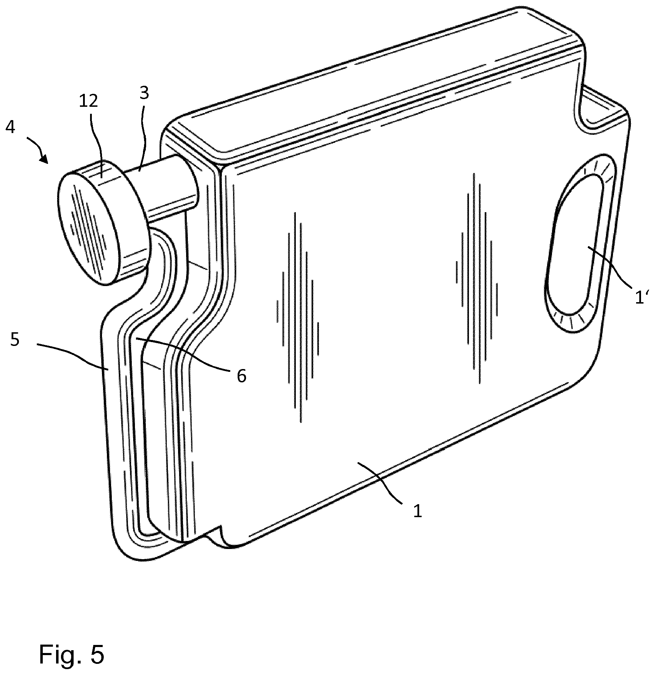

Figur 5 zeigt den Reinigungsmittelbehälter nochmals in einer isometrischen Darstellung.

Zum Bevorraten des Kaffeevollautomaten mit Reinigungsmittel braucht lediglich der alte, entleerte Reinigungsmittelbehälter entnommen werden und ein neuer, frischer Reinigungsmittelbehälter wird in das Einschubfach 2 eingeschoben. Dabei durchstechen die Einstichdorne 9, 10 die beiden Einstichbereiche 7a, 7b und stellen eine Verbindung zwischen der Reinigungsmittelzuleitung des integrierten Reinigungssystems und der Entnahmeleitung 5 des Reinigungsmittelbehälters sowie eine Verbindung mit der Luftzuleitung 11 her. Das integrierte Reinigungssystem ist somit nach Einsetzen des Reinigungsmittelbehälters 1 sofort einsatzbereit. Zusätzlich kann in dem Einschubfach 2 des Kaffeevollautomaten noch ein Sensor vorgesehen sein, mit dem festgestellt werden kann, ob ein Reinigungsmittel eingesetzt ist. Anhand einer Kennung, wie etwa einem Barcode oder einem RFID-Tag, kann außerdem festgestellt werden, ob der eingesetzte Reinigungsmittelbehälter bzw. das darin enthaltene Reinigungsmittel geeignet ist, und, falls dies nicht der Fall ist, kann über eine Steuerung des Kaffeevollautomaten eine Fehlermeldung ausgegeben bzw. eine Anwahl oder Durchführung eines Reinigungsvorganges unterbunden werden.

Neben der Verwendung zur Reinigung eines integrierten Milchsystems eines Kaffeevollautomaten kann die vorstehend beschriebene Reinigungsmittelflasche auch in einer Vielzahl anderer Vorrichtungen zur Ausgabe flüssiger Lebensmittel, bei denen aus hygienischen Gründen automatisierte Reinigungsabläufe durchgeführt werden, zum Einsatz kommen. Das Reinigungsmittel, mit dem der Reinigungsmittelbehälter ab Werk befüllt wird, kann hier je nach Einsatzgebiet und Art des auszugebenden Lebensmittels geeignet ausgewählt werden. Daneben wäre es natürlich auch möglich, eine entleerte Reinigungsmittelflasche neu zu befüllen und wiederzuverwenden.

## Patentansprüche

1. Reinigungsmittelbehälter für ein integriertes Reinigungssystem einer Vorrichtung zur Ausgabe flüssiger Lebensmittel, insbesondere Milchprodukte, welcher als ein allseitig geschlossenes Behältnis (1) mit einem seitlich an dem Behältnis angeordneten Anschlussterminal (4) ausgebildet ist, wobei das Anschlussterminal (4) einen mit einem durchstechbaren Verschluss (13, 8a) versehenen ersten Einstichbereich (7a) aufweist,
**dadurch gekennzeichnet, dass**
das Anschlussterminal (4) in einem oberen Bereich des Reinigungsmittelbehälters (1) angeordnet ist und der erste Einstichbereich (7a) in eine zum Boden des Reinigungsmittelbehälters (1) führende Entnahmeleitung (5) mündet, über die der erste Einstichbereich (7a) mit dem Bodenbereich des Behältnisses (1) fluidisch kommuniziert.

2. Reinigungsmittelbehälter nach Anspruch 1, bei dem die Entnahmeleitung (5) einstückig mit dem Reinigungsmittelbehälter (1) verbunden ist.

3. Reinigungsmittelbehälter nach einem der vorangehenden Ansprüche, bei dem das Anschlussterminal (4) einen ebenfalls mit einem durchstechbaren Verschluss (13, 8b) versehenen zweiten Einstichbereich (7b) aufweist, der in den oberen Bereich des Reinigungsmittelbehälters (1) mündet.

4. Reinigungsmittelbehälter nach einem der vorangehenden Ansprüche, welcher in etwa quaderförmig ausgebildet ist und zwei lange Seitenwände und zwei schmale Seitenwände aufweist, wobei das Anschlussterminal (4) an einer der schmalen Seitenwände angeordnet ist.

5. Reinigungsmittelbehälter nach einem der vorangehenden Ansprüche, bei dem der Reinigungsmittelbehälter (1) als Einschubkassette ausgebildet ist.

6. Reinigungsmittelbehälter nach einem der vorangehenden Ansprüche, bei dem der durchstechbare Verschluss des ersten und/oder zweiten Einstichbereichs (7a, 7b) einen elastischen Verschlussstopfen (8) umfasst.

7. Reinigungsmittelbehälter nach einem der vorangehenden Ansprüche, bei dem der durchstechbare Verschluss des ersten und/oder zweiten Einstichbereichs (7a, 7b) durch eine randseitig mit dem Reinigungsmittelbehälter (1) verbundene Verschlussfolie (13) gebildet ist.

8. Reinigungsmittelbehälter nach einem der vorangehenden Ansprüche, bei dem an oder hinter dem durchstechbaren Verschluss (13, 8a, 8b) mindestens eine Verschlusslippe (14a, 14b) angeordnet ist, welche nach Durchstechen des Einstichbereichs (7a, 7b) mittels eines hohlen Dorns (9) von diesem beiseite gehalten wird und nach Entfernen des Dorns (9) einen von diesem geschaffenen Einstichkanal verschließt.

9. Reinigungsmittelbehälter nach einem der vorangehenden Ansprüche, bei dem der hintere, von dem Anschlussterminal (4) entfernte Bereich des Reinigungsmittelbehälters (1) als Griffbereich mit einer Griffmulde (1') ausgebildet ist.

10. Reinigungsmittelbehälter nach einem der vorangehenden Ansprüche, welcher als Einwegbehälter ausgebildet ist.

11. Reinigungsmittelbehälter nach einem der vorangehenden Ansprüche, welcher mit einem Reinigungsmittel insbesondere einem Milchreiniger befüllt ist.

12. Vorrichtung zur Ausgabe flüssiger Lebensmittel, insbesondere Milchprodukte, mit einem integrierten Reinigungssystem, einem Aufnahmeraum (2) und einem in den Aufnahmeraum eingeschobenen Reinigungsmittelbehälter (1) nach einen der vorangehenden Ansprüche, wobei in dem Aufnahmeraum (2) an dessen einer Einschuböffnung abgewandten Seite (2') in einer dem ersten Einstichbereich (7a) entsprechenden Höhe ein hohler Dorn (9) zum Durchstechen des Verschlusses (8a) des Reinigungsmittelbehälters (1) angeordnet ist, wobei der hohle Dorn (9) an eine Reinigungsmittelzuleitung des integrierten Reinigungssystems angeschlossen ist.

13. Vorrichtung nach Anspruch 12, bei der an der der Einschuböffnung abgewandten Seite des Aufnahmeraums (2) in einer einem zweiten Einstichbereich (7b) des Reinigungsmittelbehälters (1) entsprechenden Höhe ein zweiter hohler Dorn (10) angeordnet ist, über den Luft in den Reinigungsmittelbehälter (1) nachströmen kann.

## Claims

1. Cleaning agent container for an integrated cleaning system of an apparatus for dispensing fluid foodstuffs, especially milk products, which is in the form of a receptacle (1) that is closed on all sides and has a connection terminal (4) arranged laterally on the receptacle, wherein the connection terminal (4) has a first piercing region (7a) provided with a puncturable closure (13, 8a),
**characterised in that**
the connection terminal (4) is arranged in an upper region of the cleaning agent container (1), and the first piercing region (7a) opens into a discharge line (5) leading to the base of the cleaning agent container (1), via which discharge line the first piercing region (7a) is in fluidic communication with the base region of the receptacle (1).

2. Cleaning agent container according to claim 1, wherein the discharge line (5) is integrally connected to the cleaning agent container (1).

3. Cleaning agent container according to either one of the preceding claims, wherein the connection terminal (4) has a second piercing region (7b) likewise provided with a puncturable closure (13, 8b), which second piercing region opens into the upper region of the cleaning agent container (1).

4. Cleaning agent container according to any one of the preceding claims, which is of approximately parallelepipedal shape and has two long side walls and two narrow side walls, wherein the connection terminal (4) is arranged on one of the narrow side walls.

5. Cleaning agent container according to any one of the preceding claims, wherein the cleaning agent container (1) is in the form of an insertable cartridge.

6. Cleaning agent container according to any one of the preceding claims, wherein the puncturable closure of the first and/or second piercing region(s) (7a, 7b) comprises a resilient closure stopper (8).

7. Cleaning agent container according to any one of the preceding claims, wherein the puncturable closure of the first and/or second piercing region(s) (7a, 7b) is formed by a closure film (13) which is joined at its edge to the cleaning agent container (1).

8. Cleaning agent container according to any one of the preceding claims, wherein at or behind the puncturable closure (13, 8a, 8b) there is arranged at least one closure lip (14a, 14b) which, after the piercing region (7a, 7b) has been punctured by means of a hollow pin (9), is held apart by the latter and, after removal of the pin (9), closes a piercing channel thereby created.

9. Cleaning agent container according to any one of the preceding claims, wherein the rear region of the cleaning agent container (1) remote from the closure terminal (4) is in the form of a grip region having a gripping recess (1').

10. Cleaning agent container according to any one of the preceding claims, which is in the form of a disposable container.

11. Cleaning agent container according to any one of the preceding claims, which is filled with a cleaning agent, especially a milk cleaner.

12. Apparatus for dispensing fluid foodstuffs, especially milk products, having an integrated cleaning system, a receiving space (2) and a cleaning agent container (1) according to any one of the preceding claims installed in the receiving space, wherein in the receiving space (2), on the side (2') thereof remote from an insertion opening and at a height corresponding to the first piercing region (7a), there is arranged a hollow pin (9) for puncturing the closure (8a) of the cleaning agent container (1), the hollow pin (9) being connected to a cleaning agent supply line of the integrated cleaning system.

13. Apparatus according to claim 12, wherein on the side of the receiving space (2) remote from the insertion opening, at a height corresponding to a second piercing region (7b) of the cleaning agent container (1), there is arranged a second hollow pin (10) through which air is able to flow into the cleaning agent container (1).

## Revendications

1. Conteneur d'agent nettoyant dévolu à un système de nettoyage intégré d'un dispositif de distribution d'aliments liquides, notamment de produits laitiers, réalisé sous la forme d'un récipient (1) fermé de toutes parts et muni d'une partie extrême de raccordement (4) disposée latéralement sur ledit récipient, laquelle partie extrême de raccordement (4) comporte une première zone de perforation (7a) pourvue d'une obturation perforable (13, 8a),
**caractérisé par le fait que**
la partie extrême de raccordement (4) est située dans une région supérieure du conteneur (1) d'agent nettoyant, et la première zone de perforation (7a) débouche dans un conduit de prélèvement (5) qui mène au fond dudit conteneur (1) d'agent nettoyant, et par l'intermédiaire duquel ladite première zone de perforation (7a) est en communication fluidique avec la région du fond du récipient (1).

2. Conteneur d'agent nettoyant, selon la revendication 1, le conduit de prélèvement (5) étant relié d'un seul tenant audit conteneur (1) d'agent nettoyant.

3. Conteneur d'agent nettoyant, selon l'une des revendications précédentes, dans lequel la partie extrême de raccordement (4) comporte une seconde zone de perforation (7b), pareillement pourvue d'une obturation perforable (13, 8b) et débouchant dans la région supérieure dudit conteneur (1) d'agent nettoyant.

4. Conteneur d'agent nettoyant, selon l'une des revendications précédentes, doté d'une réalisation sensiblement parallélépipédique et pourvu de deux parois latérales longues et de deux parois latérales étroites, la partie extrême de raccordement (4) étant disposée sur l'une desdites parois étroites.

5. Conteneur d'agent nettoyant, selon l'une des revendications précédentes, ledit conteneur (1) d'agent nettoyant étant conçu comme une cassette insérable par coulissement.

6. Conteneur d'agent nettoyant, selon l'une des revendications précédentes, dans lequel l'obturation perforable des première et/ou seconde zone(s) de perforation (7a, 7b) inclut un bouchon obturateur élastique (8).

7. Conteneur d'agent nettoyant, selon l'une des revendications précédentes, dans lequel l'obturation perforable des première et/ou seconde zone(s) de perforation (7a, 7b) est constituée d'un film obturateur (13) relié marginalement audit conteneur (1) d'agent nettoyant.

8. Conteneur d'agent nettoyant, selon l'une des revendications précédentes, dans lequel se trouve, sur ou derrière l'obturation perforable (13, 8a, 8b), au moins une lèvre obturatrice (14a, 14b) qui, à l'issue du percement de la zone de perforation (7a, 7b) au moyen d'une broche creuse (9), est maintenue de côté par cette dernière et qui, après enlèvement de ladite broche (9), obture un canal de perforation créé par celle-ci.

9. Conteneur d'agent nettoyant, selon l'une des revendications précédentes, dans lequel la région postérieure dudit conteneur (1) d'agent nettoyant, éloignée de la partie extrême de raccordement (4), est réalisée en tant que zone de préhension munie d'une augette (1') offrant prise.

10. Conteneur d'agent nettoyant, selon l'une des revendications précédentes, conçu en tant que conteneur à usage unique.

11. Conteneur d'agent nettoyant, selon l'une des revendications précédentes, empli d'un agent nettoyant se présentant notamment comme un agent de nettoyage du lait.

12. Dispositif affecté à la distribution d'aliments liquides, notamment de produits laitiers, équipé d'un système de nettoyage intégré, d'un espace de réception (2) et d'un conteneur (1) d'agent nettoyant conforme à l'une des revendications précédentes et inséré dans ledit espace de réception, sachant qu'une broche creuse (9), destinée à perforer l'obturation (8a) dudit conteneur (1) d'agent nettoyant, est logée dans l'espace de réception (2) du côté (2') de ce dernier qui pointe à l'opposé d'une ouverture d'insertion, à une hauteur correspondant à la première zone de perforation (7a), ladite broche creuse (9) étant raccordée à un conduit d'arrivée d'agent nettoyant dudit système de nettoyage intégré.

13. Dispositif selon la revendication 12, dans lequel une seconde broche creuse (10), par l'intermédiaire de laquelle de l'air peut affluer après coup dans ledit conteneur (1) d'agent nettoyant, est située du côté de l'espace de réception (2) qui pointe à l'opposé de l'ouverture d'insertion, à une hauteur correspondant à une seconde zone de perforation (7b) dudit conteneur (1) d'agent nettoyant.
